Europäisches Patentamt

European Patent Office

Office européen des brevets

(11) Publication number: **0 168 137**
**B1**

(12) **EUROPEAN PATENT SPECIFICATION**

(45) Date of publication of patent specification: **06.02.91**

(51) Int. Cl.⁵: **F 16 L 41/08**

(21) Application number: **85303346.2**

(22) Date of filing: **09.05.85**

(54) A packing for a joint.

(30) Priority: **13.07.84 GB 8417850**

(43) Date of publication of application:
**15.01.86 Bulletin 86/03**

(45) Publication of the grant of the patent:
**06.02.91 Bulletin 91/06**

(84) Designated Contracting States:
**BE DE FR GB IT NL SE**

(56) References cited:
**GB-A-2 022 727**
**GB-A-2 089 445**

**E. SCHMID et al.: "Handbuch der Dichtungstechnik", pages 361-368, 402, 403, Expert Verlag, Grafenau, DE**
**K. TRUTNOVSKY: "Berührungsdichtungen an ruhenden und bewegten Maschinenteilen", vol. 17, 1975, pages 14-22, Springer Verlag, Berlin, DE**

(73) Proprietor: **FORD MOTOR COMPANY LIMITED**
**Eagle Way**
**Brentwood Essex CM13 3BW (GB)**
(84) **BE GB IT NL SE**

(73) Proprietor: **FORD-WERKE AKTIENGESELLSCHAFT**
**Ottoplatz 2 Postfach 21 03 69**
**D-5000 Köln 21 (DE)**
(84) **DE**

(73) Proprietor: **FORD FRANCE SOCIETE ANONYME**
**344 Avenue Napoléon Bonaparte B.P. 307**
**F-92506 Rueil Malmaison Cedex (FR)**
(84) **FR**

(72) Inventor: **Wickramasuriya, Damasius Benette**
**25 Vicarage Hill**
**South Benfleet Essex (GB)**

(74) Representative: **Messulam, Alec Moses et al**
**A. Messulam & Co. 24 Broadway**
**Leigh on Sea Essex SS9 1BN (GB)**

Courier Press, Leamington Spa, England.

## Description

This invention relates to a packing for a push-fit joint where the packing is arranged to seal the joint. The invention is particularly concerned with a packing for a joint which is normally subjected to high temperatures.

GB—A—2,089,445 discloses a gasket for sealing high pressure and temperature fluids. The gasket comprises a metal liner shaped to define at least two cavities laid beside each other in inverted positions wherein inserts of an elastic material are accommodated. The inserts protrude from the cavities and ensure a tight seal contact with mating surface on two flanged elements to be interconnected.

GB—A—2,022,727 discloses an elastomeric sleeve for fastening a fuel injection nozzle in a bore leading to an inlet duct of a cylinder head. The sleeve has an inwardly extending annular rib and an outwardly extending annular rib which engage respectively an annular groove in the nozzle and a shallow annular groove in the bore. The sleeve also includes inner annular ribs which spread on insertion of the nozzle bearing the sleeve into the bore.

An example of a join to which the invention can be applied is the joint between a pulse air tube on an internal combustion engine and the engine cylinder head. A pulse air tube leads into the exhaust passage downstream of the exhaust valve. When the valve closes, the momentum of the gases flowing in the exhaust passage results in a low pressure area being formed adjacent the valve and the low pressure enables air to be sucked in through the pulse air tube to combine with unburnt hydrocarbons and carbon monoxide in the exhaust gases to reduce undesired emissions.

Conventionally the joint where the air tube passes through the wall of the cylinder head is sealed with a joint formed by tightening a nut to force the two sides of the joint against one another. Assembly is difficult and very time-consuming.

According to the present invention, there is provided a packing for a push-fit joint, the packing comprising a body of compressible material which does not degrade at temperatures around 700°C, the body being in the form of a hollow cylinder having a cylinder axis coinciding with the direction in which the joint is to be assembled, an outer sealing surface exposed on the outer wall of the cylinder and an inner sealing surface exposed on the inner wall of the cylinder characterised in that an annular end cap covers each end of the cylinder to protect the compressible material during assembly.

Important characteristics of the material are that it should be substantially non-porous, so that gases cannot escape through the annular body, that it should withstand temperatures in the range 300 to 1000°C, and that it should be sufficiently resilient to exert a continued sealing pressure against the components between which the joint is made.

The compressible material preferably is compressible by about 10%.

Suitable materials are bodies made up from graphite-based materials such as Grafoil and Graftite (Registered Trade Marks) or bodies made up from ceramic fibres such as Kaowool (Registered Trade Mark). These materials will normally be compressed, possibly with the addition of a binder, to form them into the necessary annular shape.

To assemble the joint, the packing will be pushed into a seat and a tube or other component will be pusehd through the centre of the packing. If the tube were pushed in off-centre, it could damage the packing so a cap is placed over the ends of the body to prevent this happening.

The cylinder includes an internal shield exposed on the inner wall of the cylinder opposite to that part of the outer wall where the outer sealing surface is exposed and an external shield exposed on the outer wall of the cylinder opposite to that part of the inner wall where the inner sealing surface is exposed.

The first and second body portions are preferably spaced apart axially along the length of the packing.

The parts of the packing protected by the caps are preferably compressed more tightly than the rest of the packing so as to provide a tapered entry, which is an advantage for assembly purposes.

The packing may comprise two coaxial annular bodies, one arranged to seal against a surface outwardly of the packing and the other arranged to seal against a surface inwardly of the packing, the two bodies being held together by a cage.

The cage may also form the end caps.

The invention also extends to a joint including a packing as set forth above.

The invention will now be further described, be way of example, with reference to the accompanying drawing, in which:

Figure 1 is a section through an exhaust passage in an internal combustion engine, showing a packing in accordance with the invention sealing a pulse air tube;

Figure 2 is a section through a joint with a packing in accordance with the invention, before asssmbly; and

Figure 3 shows an alternative form of packing in accordance with the invention.

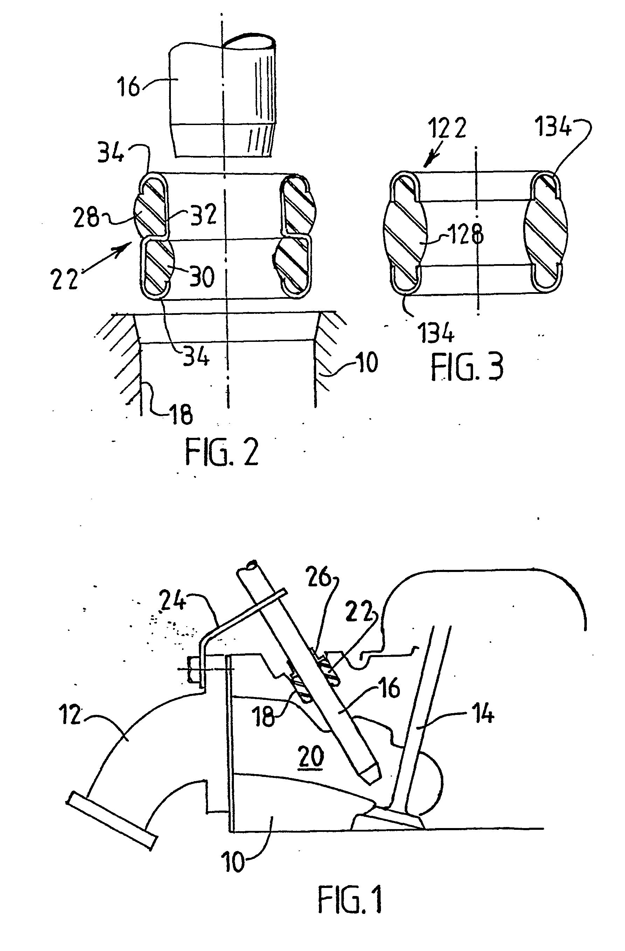

The engine section shown in Figure 1 includes part of a cylinder head 10 and an exhaust manifold 12. An exhaust valve 14 is shown in its closed position. A pulse air tube 16 fits through a bore 18 and projects into the exhaust passage 20 just downstream of the valve 14. The tube 16 is sealed in the bore 18 by a packing 22. A support bracket 24 for the tube 16 is also shown, and the tube is provided with a collar 26 to limit the depth of insertion of the tube into the packing 22.

The packing itself is shown in more detail in Fiugre 2. This packing has two separate annular bodies 28 and 30, each formed from a suitable temperature-resistant, compressible material. The bodies are linked to each other by an S-section cage 32 which may be of stainless steel. The cage 32 also provides end caps 34 at each end of the packing, to protect these ends during assembly of the joint.

In assembly, the packing 22 is first pushed into a seat in the bore 18. The pulse air tube 16, which is tapered at its leading end, is then pushed through the centre of the packing. The presence of the cap 34 prevents the tip of the tube 16 from damaging the packing material during insertion. The dimensions of the packing will be chosen so that the unconstrained surface portions of the packing material have to be compressed (by about 10%) to allow the joint to be made, and this compression ensures a good seal between the components of the joint. It is important that the cage 32 provides a fixed backing surface against which the compression of each body 28 and 30 takes place, so that the whole of the compression in each instance occurs at the interface with the component (16 or 18) where sealing has to take place.

In an alternative embodiment, the taper on the tube 16 could be formed away from the free end of the tube, with the free end having a smaller diameter which can pass through the centre of the seal without compressing it; the compression just taking place in the last part of the push-fit movement. This avoids any possible disturbance of the seal by having to push the full width tube right through the seal.

An alternative packing 122 is shown in Figure 3. This packing has a single body 128 of compressible material, with separate end caps 134 at the two ends. The end caps can again be of stainless steel.

Although the invention has been described here in connection with a pulse air tube/cylinder head joint, the invention is not restricted to this application. Other possible automotive applications are in exhaust pipe joints or in exhaust gas recirculation (EGR) systems. Other fields of application, including non-automotive fields, will be where push-fit assembly is desired and where the assembled joint has to provide a seal at high temperatures.

## Claims

1. A packing for a push-fit joint, the packing comprising a body (28, 30, 128) of compressible material which does not degrade at temperatures around 700°C, the body being in the form of a hollow cylinder having a cylinder axis coinciding with the direction in which the joint is to be assembled, an outer sealing surface (28) exposed on the outer wall of the cylinder and an inner sealing surface (30) exposed on the inner wall of the cylinder characterised in that an annular end cap (34, 134) covers each end of the cylinder to protect the compressible material during assembly.

2. A packing as claimed in Claim 1, wherein the material will withstand temperatures in the range 300 to 1000°C.

3. A packing as claimed in Claim 1 or Claim 2, wherein the compressible material is compressible by about 10%.

4. A packing as claimed in any preceding Claim, wherein the compressible material is a graphite-based material.

5. A packing as claimed in any one of Claims 1 to 3, wherein the compressible material is made up from ceramic fibres.

6. A packing as claimed in Claim 4 or Claim 5, wherein the body is compressed, possibly with the addition of a binder, to form it into the necessary annular shape.

7. A packing as claimed in any preceding Claim wherein the parts of the packing protected by the caps (34, 134) are compressed more tightly than the rest of the packing so as to provide a tapered entry.

8. A packing as claimed in any preceding Claim wherein the cylinder includes an internal shield exposed on the inner wall of the cylinder opposite to that part of the outer wall where the outer sealing surface (28) is exposed and an external shield exposed on the outer wall of the cylinder opposite to that part of the inner wall where in inner sealing surface (30) is exposed.

9. A packing as claimed in any one of Claims 1 to 7, which comprises two coaxial annular bodies (28 and 30), one arranged to seal against a surface (18) outwardly of the packing and the other arranged to seal against a surface (16) inwardly of the packing, the two bodies being held together by a cage (32).

10. A packing as claimed in Claim 9, wherein the cage (32) also forms the end caps (34).

11. A sealed joint between two cylindrical coaxial surfaces (16, 18) of different diameters, wherein a packing as claimed in any preceding claim is push-fitted between the surfaces to form a seal.

## Patentansprüche

1. Dichtung für eine Einsteckverbindung, wobei die Dichtung aus einem Körper (28, 30, 128) aus zusammendrückbarem, sich bei Temperaturen um 700°C nicht zersetzenden Material, wobei der Körper als Hohlzylinder mit einer Zylinderachse, die mit der Zusammenbaurichtung der Verbindung zusammenfällt, ausgebildet ist, einer äusseren, auf der Aussenwand des Zylinders freiliegenden Dichtfläche (28) und einer inneren, auf der Innenwand des Zylinders freiliegenden Dichtfläche (30) besteht, dadurch gekennzeichnet, daß je eine ringförmige Endkappe (34, 134) die Zylinderenden zum Schutz des zusammendrückbaren Materials beim Zusammenbau bedeckt.

2. Dichtung nach Anspruch 1, worin das Material Temperaturen im Bereich von 300 bis 1000°C widersteht.

3. Dichtung nach Anspruch 1 oder 2, worin das zusammendrückbare Material zum etwa 10% zusammendrückbar ist.

4. Dichtung nach einem der vorhergehenden Ansprüche, worin das zusammendrückbare Material ein Material auf Graphitgrundlage ist.

5. Dichtung nach einem der Ansprüche 1 bis 3, worin das zusammendrückbare Material aus Keramikfasern aufgebaut ist.

6. Dichtung nach Anspruch 4 oder 5, worin der Körper gegebenenfalls unter Zusatz eines Bindemittels zusammengedrückt wird, um ihm die erforderliche ringförmige Gestalt zu geben.

7. Dichtung nach einem der vorhergehenden Ansprüche, worin die von den Kappen (34, 134) geschützten Teile der Dichtung stärker als der Rest der Dichtung zusammengedrückt werden, um so einen verjüngten Eingang zu bilden.

8. Dichtung nach einem der vorhergehenden Ansprüche, worin der Zylinder ferner eine innere Abschirmung, die auf der Zylinderinnenwand gegenüber dem Teil der Aussenwand freiliegt, wo sich die äussere freiliegende Dichtfläche (28) befindet, und eine äussere Abschirmung, die auf der Zylinderaussenwand gegenüber dem Teil der Innenwand freiliegt, wo sich die innere freiliegende Dichtfläche (30) befindet, aufweist.

9. Dichtung nach einem der Ansprüche 1 bis 7, welche zwei koaxiale ringförmige Körper (28 und 30) imfasst, von denen der eine zur Abdichtung einer Fläche (18) ausserhalb der Dichtung und der andere zur Abdichtung einer Fläche (16) innerhalb der Dichtung angeordnet sind, wobei die beiden Körper durch einen Käfig (32) zusammengehalten werden.

10. Dichtung nach Anspruch 9, worin der Käfig (32) auch die Endkappen (34) bildet.

11. Dichtende Verbindung zwischen zwei zylindrischen koaxialen Flächen (16, 18) verschiedenen Durchmessers, worin eine Dichtung nach einem der vorhergehenden Ansprüche zwischen den Flächen dichtend eingesteckt ist.

**Revendications**

1. Garniture d'étanchéité pour assemblage à ajustement coulissant serré, cette garniture comprenant un corps (28, 30, 128) en matière compressible qui ne se dégrade pas à des températures voisines de 700°C, le corps ayant la forme d'un cylindre creux présentant un axe de cylindre coïncidant avec la direction dans laquelle l'assemblage doit être monté, une surface d'étanchéité externe (28) exposée sur la paroi externe du cylindre et une surface d'étanchéité interne (30) exposée sur la paroi interne du cylindre, caractérisé en ce qu'une coiffe d'extrémité annulaire (34, 134) recouvre chaque extrémité du cylindre afin de protéger la matière compressible pendant le montage.

2. Garniture d'étanchéité suivant la revendication 1, dans laquelle la matière doit résister à des températures comprises entre 300 et 1000°C.

3. Garniture d'étanchéité suivant la revendication 1 ou 2, dans laquelle la matière compressible peut être comprimée d'environ 10%.

4. Garniture d'étanchéité suivant l'une quelconque des revendications précédentes, dans laquelle la matière compressible est une matière à base de graphite.

5. Garniture d'étanchété suivant l'une quelconque des revendications 1 à 3, dans laquelle la matière compressible est faite de fibres de céramique.

6. Garniture d'étanchéité suivant la revendication 4 ou 5, dans laquelle le corps est comprimé, éventuellement avec addition d'un liant, de manière à prendre la forme annulaire nécessaire.

7. Garniture d'étanchéité suivant l'une quelconque des revendications précédentes, dans laquelle les parties de la garniture protégée par les coiffes (34, 134) sont comprimées davantage que le reste de la garniture afin de fournir une entrée conique.

8. Garniture d'étanchéité suivant l'une quelconque des revendications précédentes, dans laquelle le cylindre comprend une protection interne exposée sur la paroi interne du cylindre opposée à la partie de la paroi externe où la surface d'étanchéité externe (28) est exposée et une protection externe exposée sur la paroi externe du cylindre opposée à la partie de la paroi interne où la surface d'étanchéité interne (30) est exposée.

9. Garniture d'étanchéité suivant l'une quelconque des revendications 1 à 7, qui comprend deux corps annulaires coaxiaux (28 et 30), dont l'un assure l'étanchéité contre une surface (18) à l'extérieur de la garniture et l'autre assure l'étanchéité contre une surface (16) à l'intérieur de la garniture, les deux corps étant maintenus assemblés par une cage (32).

10. Garniture d'étanchéité suivant la revendication 9, dans laquelle la cage (32) forme également les coiffes d'extrémité (34).

11. Assemblage étanche entre deux surfaces coaxiales cylindriques (16, 18) de diamètres différents, dans lequel une garniture d'étanchéité suivant l'une quelconque des revendications précédentes est ajustée à coulissement serré entre les surfaces pour former un joint d'étanchéité.

16

34

28 — 32

22 — 30

34

18

FIG. 2

122 134

128

134

FIG. 3

24

26

22

12

18 16

20

14

10

FIG.1

1